Europäisches Patentamt

European Patent Office

Office européen des brevets

(11) Veröffentlichungsnummer: **0 333 631**
**A1**

(12) **EUROPÄISCHE PATENTANMELDUNG**

(21) Anmeldenummer: 89630053.0

(22) Anmeldetag: 17.03.89

(51) Int. Cl.⁴: **B 21 F 33/00**
B 65 G 57/081

(30) Priorität: 18.03.88 LU 87174

(43) Veröffentlichungstag der Anmeldung:
20.09.89 Patentblatt 89/38

(84) Benannte Vertragsstaaten:
AT BE CH DE FR IT LI NL

(71) Anmelder: **TREFILARBED BOUWSTAAL GENT N.V.**
**Oude Brusselseweg 71**
**B-9219 Gent (BE)**

(72) Erfinder: **Bogaerts, Guido**
**Spieveldstraat 107**
**B-2700 St. Niklaas (BE)**

**Willems Marcel**
**Jules Van Biesbroeckstraat 7**
**B-9219 Gentbrugge (BE)**

(74) Vertreter: **Freylinger, Ernest T. et al**
**Office de Brevets FREYLINGER & ASSOCIES B.P. 1 321,**
**route d'Arlon**
**L-8001 Strassen (LU)**

(54) Stapelmaschine für Baustahlmatten.

(57) Die Stapelmaschine besteht aus einem mit Schlitzen versehenen Blechtisch (8) auf den die maschinell gefertigten Baustahlmatten (4, 5) parallel nebeneinander gelegt werden, aus mindestens zwei, an einer drehbaren Welle (6) befestigten Armen(7) und aus mindestens zwei über die Stapelposition (9) ausfahrbare Balken (1). Die Balken (1) sind mit Mitnehmerstiften (2, 3) versehen die durch Schlitze aus dem Tisch (8) hervorragen und die Stahlmatten (4, 5) durch Verschiebung der Balken (1) der Stapelposition (9) zuführen. Die Arme (7) weisen Klemmvorrichtungen (50, 52) für die Stahlmatten (4, 5) auf. Die Arme (7) sind aus einer Ruhelage mittels der Welle (6) durch Schlitze im Tisch (8) hindurch um 180° drehbar.

Fig.6

EP 0 333 631 A1

Bundesdruckerei Berlin

Beschreibung

## Stapelmaschine für Baustahlmatten

Die Erfindung betrifft eine Stapelmaschine für Baustahlmatten gemäss Oberbegriff des Anspruchs 1.

Stahlmatten bestehen aus rechtwinklig sich kreuzenden Bewehrungsstäben mit glatter, profilierter oder gerippter Oberfläche mit Durchmessern bis zu 16 mm, die an den Kreuzungspunkten durch Widerstands-Punktschweissung miteinander verbunden sind. Die Matten werden heute auf fast allen Anwendungsgebieten des Hoch- und Tief-Stahlbetonbaues eingesetzt. Als industriell vorgefertigtes Bewehrungselement sind die Stahlmatten zum Massenprodukt geworden. Betonstahlmatten ersetzen überaus kostengünstig einen grossen Teil der beim Verlegen erforderlichen Handarbeit durch eine automatische Fertigung in der Fabrik. Insbesondere bei flächenartigen Bauteilen wie Decken, Sohlplatten, Betonfahrbahnen, wo nur in geringem Masse ein zusätzliches Schneiden und Biegen anfällt, wird der Kostenvorteil am grössten.

Ein weiteres vorteilhaftes Anwendungsgebiet ist die Fertigteilbauweise, bei der Stahlmatten in eine Verschalung eingebracht werden welche anschliessend mit Beton oder Gasbeton ausgegossen wird. Diese Stahlmatten haben festliegende Längen und Breiten die wesentlich kleiner sind als die der Matten welche in der Ortbetonbauweise eingesetzt werden; ausserdem haben die Bewehrungsstäbe nur einen Durchmesser von etwa 5 mm. Die Matten haben folglich einen relativ grossen Volumen/Gewicht Faktor. Aus Transportgründen werden die Matten derart gestapelt, dass die Querstäbe von zwei benach barten Matten jeweils nebeneinander zu liegen kommen. Jede zweite, aus der Widerstandsschweissmaschine kommende Matte wird folglich umgedreht, bevor sie auf den Stapel abgelegt wird. Zusätzlich kommt, dass üblicherweise eine Widerstandsschweissmaschine mit zwei Bahnen eingesetzt wird und die gefertigten Matten auf einem einzigen Stapel abgelegt werden.

Die vorliegende Erfindung hat sich als Aufgabe gestellt, eine Stapelmaschine zu schaffen, welche ein derartiges Stapeln erlaubt. Diese Aufgabe wird durch die in Anspruch 1 angegebene Erfindung gelöst. Vorteilhafte Ausgestaltungen der Erfindung sind in den abhängigen Ansprüchen angegeben.

Die Erfindung wird anhand von Zeichnungen, welche eine Ausführmöglichkeit darstellen, näher erläutert. Es zeigen:

- die Fig. 1 - 4 schematische Schnitte durch die Stapelmaschine in aufeinanderfolgenden Arbeitsstufen.

- die Fig. 5, eine schematische Seitenansicht der Festklemmvorrichtung der Stahlmatte und

- die Fig. 6, eine Draufsicht der Stapelmaschine.

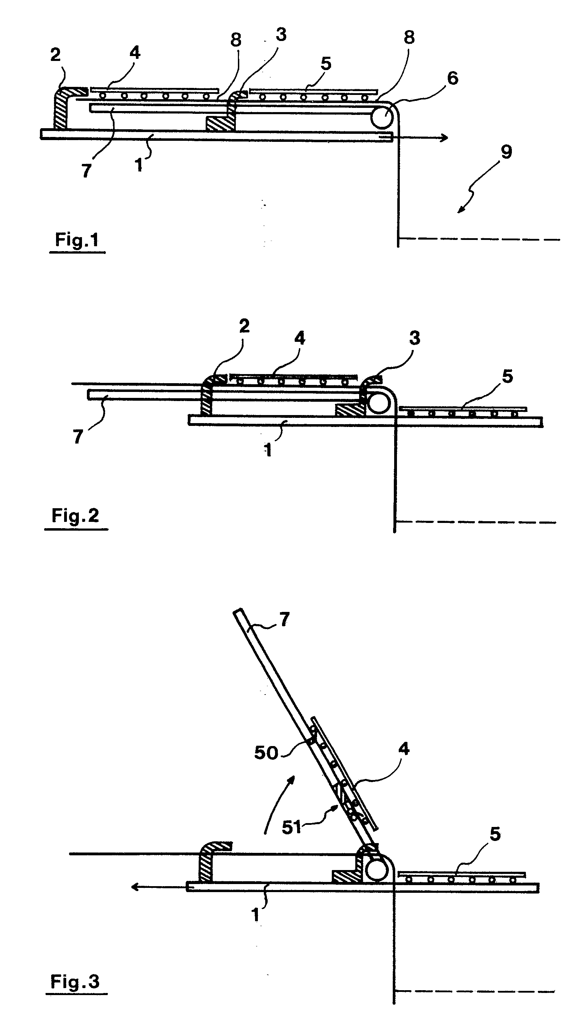

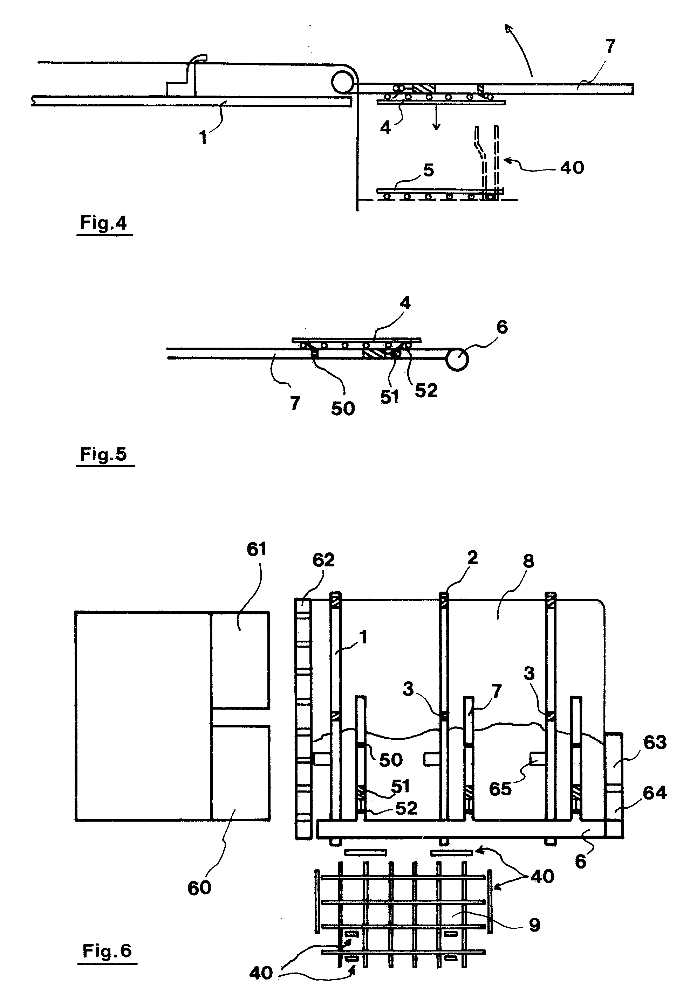

Auf Fig. 1 ist ein Balken 1 zu erkennen, der über etwa die Hälfte seiner Länge in Pfeilrichtung verschoben werden kann. An dem Balken sind zwei Mitnehmerstifte 2, 3 mittels Verschraubung befestigt. Auf einem Blechtisch 8 liegen zwei Stahlmatten 4, 5. Dieser Tisch besitzt längliche Schlitze, durch die sich die Mitnehmerstifte 2 und 3 frei bewegen können. Ausserdem ist ein Arm 7 dargestellt, welcher an einer drehbaren Welle 6 befestigt ist. Auch hier sind Schlitze in dem Blechtisch vorgesehen, so dass die Arme 7 sich aus ihrer dargestellten Ruhelage um etwa 180° in Uhrzeiger-Richtung, zur Stapelposition 9 hin, frei drehen können. Um die Arme 7 zu bewegen, kann bspw. ein Hebelarm 64, auf den ein Hydraulikmotor 63 wirkt (siehe Fig.6) an der Welle 6 befestigt werden; die Balken 1 werden vorteilhafterweise über Zahnstangen durch Elektromotoren 65 bewegt. Die verschiedenen Lagen der Balken 1 und der Dreharme 7 werden mittels Sensoren überwacht, welche an einen Rechner angeschlossen sind. Der Rechner steuert den Elektro- und den Hyraulik-Motor sowie die Festklemmvorrichtung, auf die näher anhand von Fig. 5 eingegangen wird. Bei Aenderung der Abmessungen oder der Stababstände der verschweissten Stahlmatten kann mittels weniger Handgriffe -Verstellen der Mitnehmerstifte 2, 3, auf den Balken sowie Eingabe der neuen Daten in den Rechner- in wenigen Minuten die Stapelmaschine den neuen Gegebenheiten angepasst werden. Es sei noch bemerkt, dass der Blechtisch 8 sich etwa auf der Höhe befindet auf der die Matten aus den Bahnen 60, 61 der Schweissmaschine (siehe Fig. 6) kommen. Zwischen letzteren und der Stapelmaschine ist ein Satz angetriebener Rollen 62 angeordnet, welche die Stahlmatten in die gewünschte Lage auf dem Tisch 8 befördern i.e. neben die Stapelposition 9.

Auf Fig. 2 ist ein Balken 1 in ausgefahrener Lage zu erkennen. Die Mitnehmerstifte 3 haben die Matte 5 vom Tisch 8 geschoben und diese liegt nun frei auf den Balken 1. Die seitliche Bewegung der Balken 1 hat über die Mitnehmerstifte 2 die Matte 4 derart verschoben, dass diese nun die frühere Lage der Matte 5 einnimmt.

In der auf Fig. 3 dargestellten Lage, haben die Arme 7 sich um etwa 75° gedreht, wobei die Matte 4 durch die Festklemmvorrichtung 50, 51 auf den Armen festgehalten wird. Die Balken 1 können nunmehr in ihre Ausgangslage zurückgefahren werden und die Matte 5 fällt frei auf die Stapelposition 9.

In der letzten dargestellten Lage (siehe Fig.4) der Stapelmaschine haben die Arme 7 sich um etwa 180° gedreht. Die Stahlmatte 4 wird noch an den Armen 7 festgehalten, während die Matte 5 auf dem Stapel liegt. Zusätzlich sind hier noch die üblichen Führungselemente 40 angedeutet welche ein Ausbrechen der Matten während des freien Falles vermeiden und einen tadellosen Stapel sicherstellen. Derartige Elemente sind von Vorteil aber nicht unbedingt erforderlich. Nach dem Lösen der Matte fahren die Arme 7 in ihre Ausgangslage zurück und die zwei nächsten Matten können auf den Tisch 9 geschoben werden.

Die auf Fig. 5 dargestellte Festklemmvorrichtung besteht im wesentlichen aus zwei Haken, wobei der eine (Bezugszeichen 50) in Höhe des äussersten Längsstabes der Matte 4, an dem Arm 7 befestigt ist und der zweite (Bezugzeichen 52) über einen Luftdruckzylinder 51 bewegt werden kann. Beide Haken sind leicht in Richtung der zu klemmenden Längsstäbe hin gekrümmt. Um die Längs-Verschiebung der Matten 4 aus der Schweissmaschine heraus nicht zu beeinträchtigen, liegen die Haken 50, 52 knapp unter der Tischebene. Bei der Drehbewegung der Welle 6 kommt die Matte auf die Arme zu liegen und gleitet einige Zentimeter bis sie an dem Haken 50 anliegt; dann wird der Luftdruckzylinder 51 unter Druck gesetzt und der Haken 52 klemmt die Matte fest. Der Luftdruck, welcher einen festen Halt der Matte auf dem Arm sicherstellt ohne die Stäbe/Schweiss-Stellen zu beschädigen wird durch einfache Versuche bestimmt. Da der Luftdruckzylinder den Haken 52 über eine grössere Distanz bewegen kann, besteht im Prinzip die Möglichkeit, Matten mit verschiedenen Stababständen festzuklemmen ohne den Haken 50 und den Luftdruckzylinder 51 zu verstellen. Um ein seitliches Ausbrechen des Hakens zu vermeiden kann es bei schweren Matten von Vorteil sein, diesen an einem Rollwagen zu befestigen; die Rollen werden in einer am Arm 7 befestigten Längsschiene geführt.

Neben einer mechanischen Festklemmvorrichtung, wobei die anhand der Fig. 5 beschriebene Ausführungsform sich besonders gut bewährt hat, kann auch auf Elektromagnete zurückgegriffen werden. Hier muss aber bedacht werden, dass diese die Matten magnetisieren, was bei vielen Kunden unerwünscht ist.

Bei der auf Fig.6 gezeigten Draufsicht der Stapelmaschine -ohne Matten- wurden dieselben Bezugszeichen wie bisher verwendet, so dass weitere Erklärungen sich erübrigen. Bemerkt sei auch hier, dass das funktionelle Zusammenwirken der Teile erläutert werden soll aber deren relative Abmessungen nicht stimmen. In der dargestellten Ausführung besitzt die Maschine drei Balken 1 und drei, mit Festklemmvorrichtungen versehene Dreharme 7; wie aus dem Stapel9 ersichtlich, haben die Matten zwar die nominale Breite aber nur etwa 2/3 der Länge für die die Maschine ausgelegt ist. Ein Teil des Blechtisches 8 wurde weggelassen, um den Dreharm 6 zu zeigen.

**Patentansprüche**

1. Stapelmaschine zum Stapeln von Baustahlmatten (4,5), welche in einer Schweissmaschine mit zwei Bahnen (60, 61) gefertigt werden, auf einer einzigen Stapelposition (9), wobei die Querstäbe von zwei benachbarten Matten (4, 5) sich jeweils nebeneinander befinden, dadurch gekennzeichnet, dass seitlich von einem Blechtisch (8) auf den die gefertigten Matten parallel nebeneinander zu liegen kommen, eine drehbare Welle (6) angeordnet ist, an der wenigstens zwei quer zu ihr ausgerichtete Arme (7) befestigt sind, die sich in Ruhelage knapp unter der Tischebene befinden und in ausgefahrener Lage über der Stapelposition (9), wobei der Tisch mit Schlitzen versehen ist durch die die Arme sich beim Drehen bewegen können und, dass wenigstens zwei quer zur Welle über die Stapelposition ausfahrbare Balken (1) vorgesehen sind, welche sich in Ruhelage unter dem Tisch befinden, wobei die Balken mit Mitnehmerstiften versehen sind, die durch Schlitze aus dem Tisch hervorragen, wodurch die Matten bei der Bewegung der Balken parallel zueinander zur Stapelposition hin verschoben werden.

2. Stapelmaschine gemäss Anspruch 1, dadurch gekennzeichnet, dass wenigstens zwei Arme (7) mit einer Festklemmvorrichtung für die Matten versehen sind.

3. Stapelmaschine gemäss Anspruch 2, dadurch gekennzeichnet, dass die Festklemmvorrichtung aus zwei Haken (50, 52) besteht, wobei der eine am Arm besfestigt ist und der andere längs des Armes (7) beweglich ist.

4. Stapelmaschine gemäss Anspruch 3, dadurch gekennzeichnet, dass der eine Haken (52) über einen Luftdruckzylinder (51) bewegt wird.

5. Stapelmaschine gemäss Anspruch 1, dadurch gekennzeichnet, dass die Welle (6) durch einen Hebelarm (64) und einen Hydraulikmotor (63) gedreht wird.

6. Stapelmaschine gemäss Anspruch 1, dadurch gekennzeichnet, dass die Balken mit Zahnstangen versehen sind, die durch Elektromotoren (65) bewegt werden.

Fig.1

Fig.2

Fig.3

**Fig.4**

**Fig.5**

**Fig.6**

# EUROPÄISCHER RECHERCHENBERICHT

Nummer der Anmeldung

## EINSCHLÄGIGE DOKUMENTE

EP 89630053.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y | <u>DE - A1 - 3 237 255</u><br>(REINKING MASCHINENBAU)<br> * Anspruch 5; Fig. 1 *<br>-- | 1 | B 21 F 33/00<br>B 65 G 57/081 |
| Y | <u>AT - B - 239 037</u><br>(E.V.G.)<br> * Anspruch 1,2; Fig. 4,5,7 * | 1 | |
| X | * Totality *<br>-- | 2,3,6 | |
| A | <u>AT - B - 366 937</u><br>(E.V.G.)<br> * Seite 5, Zeilen 39-41;<br> Fig. 2 *<br><br>---- | 4 | |

| | |
|---|---|
| | RECHERCHIERTE SACHGEBIETE (Int. Cl.4) |
| | B 21 F 23/00<br>B 21 F 27/00<br>B 21 F 33/00<br>B 65 G 57/00 |

Der vorliegende Recherchenbericht wurde für alle Patentansprüche erstellt.

| Recherchenort | Abschlußdatum der Recherche | Prüfer |
|---|---|---|
| WIEN | 05-06-1989 | BISTRICH |

EPA Form 1503 03 82